(19) Europäisches Patentamt
European Patent Office
Office européen des brevets

(11) **EP 3 921 777 B1**

## (12) EUROPEAN PATENT SPECIFICATION

(45) Date of publication and mention
of the grant of the patent:
**11.03.2026 Bulletin 2026/11**

(21) Application number: **20701629.6**

(22) Date of filing: **29.01.2020**

(51) International Patent Classification (IPC):
**G06N 3/04** *(2023.01)*

(52) Cooperative Patent Classification (CPC):
**G06N 3/045; G06N 3/0464; G06N 3/09**

(86) International application number:
**PCT/EP2020/052185**

(87) International publication number:
**WO 2020/160981 (13.08.2020 Gazette 2020/33)**

### (54) DETERMINATION OF THE DRIVING CONTEXT OF A VEHICLE

BESTIMMUNG DES FAHRKONTEXTS EINES FAHRZEUGS

DÉTERMINATION DU CONTEXTE DE CONDUITE D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2019 EP 19465505**

(43) Date of publication of application:
**15.12.2021 Bulletin 2021/50**

(73) Proprietor: **Elektrobit Automotive GmbH
91058 Erlangen (DE)**

(72) Inventors:
• **MARINA, Liviu
60488 Frankfurt am Main (DE)**
• **GRIGORESCU, Sorin Mihai
60488 Frankfurt am Main (DE)**

(74) Representative: **Aumovio Corporation
AUMOVIO Germany GmbH
Taunusstraße 36
80807 München (DE)**

(56) References cited:
• R. GOEDDEL; E. OLSON: "Learning semantic place labels from occupancy grids using CNNs", IEEE/RSJ INTERNATIONAL CONFERENCE ON INTELLIGENT ROBOTS AND SYSTEMS (IROS, 2016, XP002793122
• S. HOERMANN; M. BACH; K. DIETMAYER: "Dynamic Occupancy Grid Prediction for Urban Autonomous Driving: A Deep Learning Approach with Fully Automatic Labeling", ARXIV:1705.08781, May 2017 (2017-05-01), XP002793123

**Description**

The present invention is related to a method, a computer program, and an apparatus for determining a driving context of a vehicle. The invention is further related to a driver assistance system, which makes use of such a method or apparatus for determining a driving context of a vehicle, and to an autonomous or semi-autonomous vehicle comprising such a driver assistance system.

The driving strategies deployed by highly autonomous driving systems are dependent on the driving context, i.e. different driving strategies are used when the ego-car is driving on a motorway, in a city, or when it is trying to park. Accordingly, in order to enable a highly autonomous driving system to select an optimal driving strategy, it first needs to be aware of the context in which the vehicle is driving.

Occupancy grids are widely used to map indoor spaces for autonomous navigation by self-driving agents. In this context, convolutional neural networks have been trained on 2D range data for the semantic labelling of places in an unseen environment, as described in the article by R. Goeddel et al.: "Learning semantic place labels from occupancy grids using CNNs" [1]. This approach allows a robot to use Lidar for space classification with convolutional neural networks, where occupancy grids created from Lidar scans have been converted to grey images used in training the convolutional neural networks. In this document, using the trained convolutional neural networks the robot is able to distinguish between three classes, that is, room, corridor, and doorway. This output is further used to create a localization space map. However, this solution to indoor mapping does not apply to outdoor autonomous driving, where the traffic scene has a more complex structure. In particular, driving through an outdoor environment implies the interaction with dynamic objects, an interaction that is not taken into consideration by the method presented in [1].

Also the construction of occupancy grids from the interaction of a robot with its surrounding environment has been reported. Use of recurrent neural networks for tracking and classifying the surroundings of a robot placed in a dynamic and partially observable environment is described in the article by P. Ondruska et al.: "End-to-End Tracking and Semantic Segmentation Using Recurrent Neural Networks" [2]. A recurrent neural network filters the input stream of raw laser measurements in order to infer the objects locations together with their identity, in both visible and occluded areas. The algorithm takes inspiration from Deep Tracking, a deep learning system that leverages on deep neural networks for end-to-end tracking. Raw sensory data is used to construct an occupancy grid, where the visible pixels are labelled for the supervised training of the classifier. The training data has been recorded from a static and stationary position of the robot, resulting in low data variability.

An approach to the usage of neural networks on occupancy data is described in the article by S. Hoermann et al.: "Dynamic Occupancy Grid Prediction for Urban Autonomous Driving: A Deep Learning Approach with Fully Automatic Labeling" [3]. In this document, an environment modelled with a Bayesian filtering technique is processed through a deep neural network with the purpose of obtaining a long-term driving situation prediction for intelligent vehicles. The algorithm predicts future static and dynamic objects using a convolutional neural network trained on occupancy grids.

It is an object of the present invention to provide an improved solution for determining a driving context of a vehicle, which is suitable for application to real-world complex and dynamic scenes, such as autonomous driving.

This object is achieved by a method for determining a driving context of a vehicle according to claim 1, by a computer program code according to claim 10, and by an apparatus for determining a driving context of a vehicle according to claim 11. The dependent claims include advantageous further developments and improvements of the present principles as described below.

According to a first aspect, a method for a driver assistance system and for determining a driving context of a vehicle, wherein the driving context is one of various road traffic environments, comprises:

- receiving sensor data of one or more sensors of the vehicle;
- determining an occupancy grid in real-time based on the sensor data, wherein grid cells of the occupancy grid represent an occupancy probability;
- parsing the occupancy grid in real-time with a convolutional neural network for determining the driving context; and
- selecting, by an autonomous driving system, a driving strategy using the driving context.

Similarly, a computer program code comprises instructions, which, when executed by at least one processor, cause the at least one processor to determine a driving context of a vehicle, wherein the driving context is one of various road traffic environments, by performing the steps of:

- receiving sensor data of one or more sensors of the vehicle;
- determining an occupancy grid in real-time based on the sensor data, wherein grid cells of the occupancy grid represent an occupancy probability; and
- parsing the occupancy grid in real-time with a convolutional neural network for determining the driving context.

The term computer has to be understood broadly. In particular, it also includes electronic control units and other processor-based data processing devices.

The computer program code can, for example, be made available for electronic retrieval or stored on a computer-readable storage medium.

According to a further aspect, an apparatus for a driver assistance system and for determining a driving context of a vehicle, wherein the driving context is one of various road traffic environments, comprises:

- an input for receiving sensor data of one or more sensors of the vehicle;
- an occupancy grid fusion unit for determining an occupancy grid in real-time based on the sensor data, wherein grid cells of the occupancy grid represent an occupancy probability;
- a convolutional neural network for parsing the occupancy grid in real-time to determine the driving context; and
- selecting, by an autonomous driving system, a driving strategy using the driving context.

The proposed solution leverages on the power of deep neural architectures in order to learn a grid-based representation of the traffic scene. Using occupancy grids instead of raw image data allows coping with common uncertainties present in autonomous driving scenes. Examples of such uncertainties are changes in the sensors calibration, pose, time and latency. The occupancy grids are computed in real-time, during the movement of the autonomous car, and allow classifying the environment where the car is currently located. The occupancy grids can immediately be used for classification without a need to accumulate a certain amount of information. The described solution shows a high classification accuracy. Furthermore, the algorithm is very efficient, making it suitable for real-time applications, and can be implemented on low performance processors.

In one advantageous embodiment, the convolutional neural network constructs a grid representation of the driving environment by converting the occupancy grid into an image representation, where the grid cells of the occupancy grid are coded as image pixels. The colors of the pixels can be used to represent states of the grid cells. For example, a first color can indicate an obstacle, whereas a second color indicates free space. A third color may be used to designate an unknown state. In addition, the pixel intensity with respect to a specific color code may be used to represent the occupancy confidence. The image representation is well-suited for subsequent processing by the convolutional neural network.

In one advantageous embodiment, the occupancy grid is constructed using the Dempster-Shafer theory. The Dempster-Shafer theory, also known as the theory of evidence or the theory of belief functions, is well understood and often used as a method of sensor fusion.

In one advantageous embodiment, the occupancy information of the grid cells of the occupancy grid is gradually decreased over time. The content of the grid layer thus gets degraded over time. The grid content is constantly updated in real-time with each sensory measurement. In this way, the interaction with dynamic objects is taken into consideration, which is a useful measure in an outdoor environment.

In one advantageous embodiment, the convolutional neural network consists of a first convolutional layer with 48 kernels and a second convolutional layer with 96 kernels. The size of the convolution kernel is $9 \times 9$ for the first convolutional layer and $5 \times 5$ for the second convolutional layer. The resulting smaller activation maps help to achieve a real-time performance required by highly autonomous driving systems.

In one advantageous embodiment, the convolutional neural network comprises three fully connected layers linked to a final Softmax activation function for calculating driving context probabilities. In this way the number of layers is reduced to a necessary minimum, which helps to keep the architecture of the convolutional neural network simple.

In one advantageous embodiment, the sensor data are at least one of Sonar data, Lidar data, and Radar data. These types of data are typically available in autonomous or semi-autonomous vehicles. They are well-suited for detecting obstacles and thus for determining an occupancy grid.

In one advantageous embodiment, the driving context is one of inner city, motorway, and parking lot. Highly autonomous driving systems typically deploy different driving strategies when the ego-car is driving on a motorway or driving in the inner city.

Advantageously, a driver assistance system comprises an apparatus according to the invention or is configured to perform a method according to the invention for selecting a driving strategy. Such a driver assistance system is favorably used in an autonomous or semi-autonomous vehicle. In this way it is ensured that during autonomous driving optimal driving strategies are selected.

Further features of the present invention will become apparent from the following description and the appended claims in conjunction with the figures.

Figures

Fig. 1    schematically illustrates a method for determining a driving context of a vehicle;

Fig. 2    schematically illustrates a first embodiment of an apparatus for determining a driving context of a vehicle;

Fig. 3    schematically illustrates a second embodiment of an apparatus for determining a driving context of a vehicle;

Fig. 4    shows a high-level architecture of the present approach towards a deep learning system for driving context determination;

Fig. 5    illustrates the behavior of the Dempster-Shafer algorithm;

Fig. 6    shows test drive data, computed occupancy grids, and activations of a first layer of the convolutional neural network for a motorway context;

Fig. 7    shows test drive data, computed occupancy grids, and activations of a first layer of the convolutional neural network for an inner city context; and

Fig. 8    shows test drive data, computed occupancy grids, and activations of a first layer of the convolutional neural network for a parking lot context.

Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

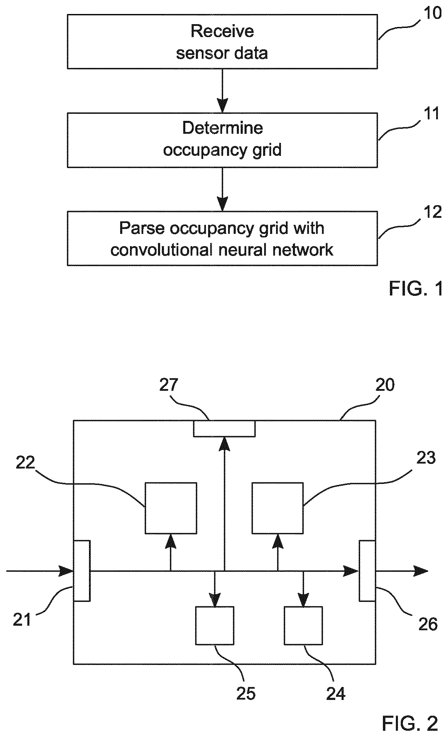

Fig. 1 schematically illustrates a method for determining a driving context of a vehicle. In a first step, sensor data of one or more sensors of the vehicle are received 10. Advantageously, the sensor data are at least one of Sonar data, Lidar data, and Radar data. Then an occupancy grid is determined 11 based on the sensor data. For example, the occupancy grid may be constructed using the Dempster-Shafer theory. The occupancy information of the grid cells of the occupancy grid is preferably gradually decreased over time. Finally, the occupancy grid is parsed 12 with a convolutional neural network for determining the driving context. For this purpose the convolutional neural network may construct a grid representation of the driving environment by converting the occupancy grid into an image representation, where the grid cells of the occupancy grid are coded as image pixels. By way of example, the driving context may be one of inner city, motorway, and parking lot.

Fig. 2 schematically illustrates a block diagram of a first embodiment of an apparatus 20 for determining a driving context of a vehicle. The apparatus 20 has an input 21 for receiving sensor data SD of one or more sensors of the vehicle.

Advantageously, the sensor data SD are at least one of Sonar data, Lidar data, and Radar data. An occupancy grid fusion unit 22 determines an occupancy grid based on the sensor data SD. The occupancy grid fusion unit 22 may construct the occupancy grid m using the Dempster-Shafer theory, for example. The occupancy information of the grid cells of the occupancy grid is preferably gradually decreased over time. The apparatus 20 further has a convolutional neural network 23 for parsing the occupancy grid to determine the driving context. For this purpose the convolutional neural network 23 may construct a grid representation of the driving environment by converting the occupancy grid into an image representation, where the grid cells of the occupancy grid are coded as image pixels. For example, the driving context may be one of inner city, motorway, and parking lot. Data generated by the apparatus 20 can be stored in a local storage unit 25 or made available for further processing via an output 26. The output 26 may also be combined with the input 21 into a single bidirectional interface.

The occupancy grid fusion unit 22 and the convolutional neural network 23 may be controlled by a controller 24. A user interface 27 may be provided for enabling a user to modify settings of the occupancy grid fusion unit 22, the convolutional neural network 23, or the controller 24. The occupancy grid fusion unit 22, the convolutional neural network 23, and the controller 24 can be embodied as dedicated hardware units. Of course, they may likewise be fully or partially combined into a single unit or implemented as software running on a processor.

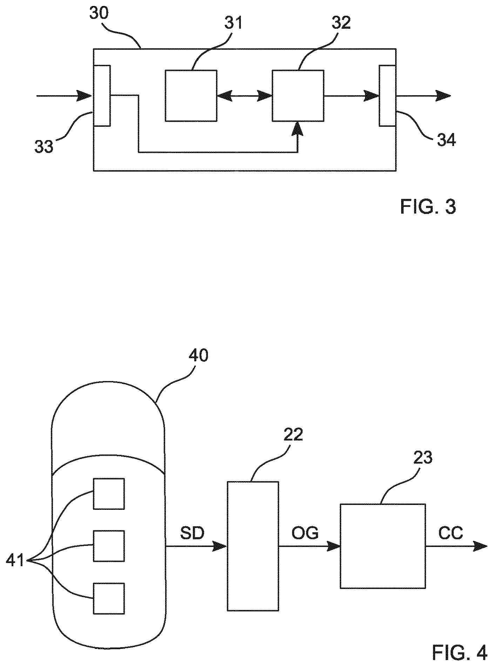

A block diagram of a second embodiment of an apparatus 30 for determining a driving context of a vehicle is illustrated in Fig. 3. The apparatus 30 comprises a processing device 31 and a memory device 32. For example, the apparatus 30 may be a computer or an electronic control unit. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 25 and the memory device 32 may include volatile and/or non-volatile memory regions and storage devices such as hard disk drives, optical drives, and/or solid-state memories.

In the following, a more detailed description of the present approach towards a deep learning system for driving context determination shall be given with reference to Fig. 4 to Fig. 8.

Fig. 4 shows a high-level architecture of the deep learning system for driving context determination. Sensor data SD are provided by sensors 41 of a vehicle 40. These sensor data SD are used by an occupancy grid fusion unit 22 to determine an occupancy grid OG. The underlying algorithm is mainly composed of two elements, namely an occupancy grid fusion algorithm and a convolutional neural network 23 used for parsing the occupancy grid OG in real-time. The outcome obtained from the system is a driving context classification CC, mapped to three classes: inner city, motorway and parking lots.

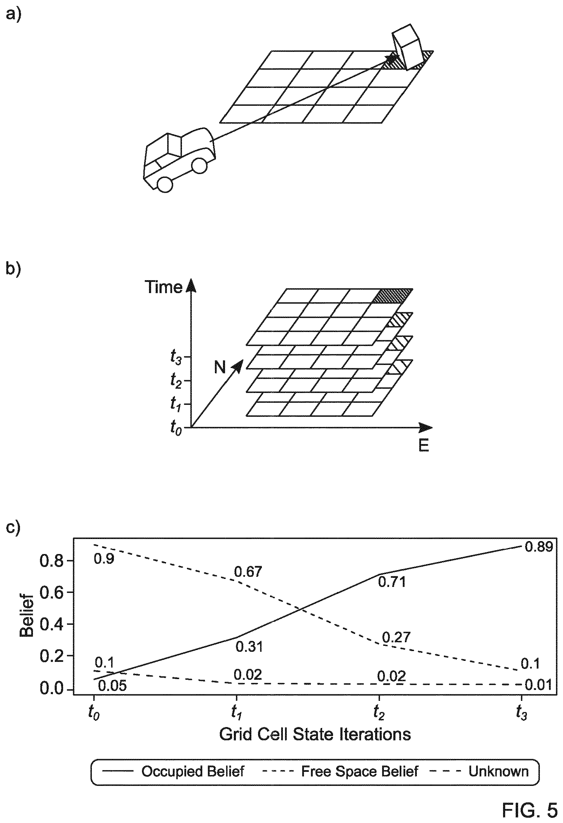

Occupancy grids are often used for environment perception and navigation, applications which require techniques for data fusion and obstacles avoidance. In the present case, the grids are constructed using the Dempster-Shafer theory, also known as the theory of evidence or the theory of belief functions. A pedagogical example of the Dempster-Shafer approach is illustrated in Fig. 5, where an ego-car encounters an obstacle when driving on the North-East (NE) direction. Fig. 5a) illustrates the underlying measurement, Fig. 5b) graphically illustrates the cell occupancy belief evolution, Fig. 5c) indicates the corresponding numerical values of the belief evolution.

The basic idea behind occupancy grids is the division of the environment into 2D cells, where each cell represents the probability, or belief, of occupation. In the present approach, Sonar, Lidar, and Radar sensory data are used to model the uncertainty of obstacles measurements and to derive the occupancy belief. A belief is assigned to every cell which intersects the ray of a range measurement. This information is then accumulated over time and fused into a single grid. The content of the grid layer gets degraded over time by gradually decreasing the occupancy information for every grid cell. The grid content is updated over and over again, in real-time, with each sensory measurement.

The occupancy grid computed with the above-described method represents the input to a convolutional neural network, which constructs a grid representation of the driving environment. The grid map is firstly converted into an image representation, where each grid cell is coded as an image pixel. White pixels represent obstacles, free space is coded with medium grey, while unknown states are represented in black. The higher a pixel intensity towards a specific colour code is, the higher the occupancy confidence is.

The system architecture has been developed for deployment within a highly autonomous driving software platform. Therefore, smaller activation maps have been designed in order to achieve real-time performance. The convolutional neural network consists of two convolutional layers with 48 and 96 kernels, respectively. The convolutional kernel has been reduced to a 9X9 size for the first network layer and to 5X5 for the second one. A rectified linear unit filters each convolution, followed by a normalization layer and a pooling operation. The network also contains three fully connected layers linked to a final Softmax activation function, which calculates the driving context probabilities.

To train and validate the described approach, a dataset has been created using sensory data recorded from a test car equipped with Sonar, Lidar and Radar sensors. The test car has been driven in various inner city areas, motorways, and inside parking lots. The recordings were done during daytime and include crowded, as well as light traffic conditions. The occupancy grids have been computed as 2D arrays covering an area of $10\times10$ m$^2$ for each occupancy grid, with a resolution of 0.25 m. The ego-vehicle is always located in the centre of the occupancy grid.

The system was trained and validated on 6.000 data samples, as follows. The recorded dataset was manually annotated into three classes: Inner city, motorway, and parking lot. From the total amount of samples, 80% were used for training, 15% for validation and 5% for testing.

The training of the system was performed using the NVIDIA deep learning GPU training system (DIGITS), which can be used to rapidly train deep neural networks for image classification, segmentation, and object detection tasks. The classification model was trained from scratch, using the dataset described above, a learning rate $\alpha$ of 0.0001, and Stochastic gradient Descent (SGD) as solver. SGD updates the network's weights W using a linear combination of the previous weight update $V_t$ and the negative gradient $\nabla L(W)$. The weight of the previous update is called momentum $\mu$ and the learning rate $\alpha$ is the weight of the negative gradient. The following rule was used to calculate the updated value $V_{t+1}$ and the updated weight $W_{t+1}$ at moment $t + 1$:

$$V_{t+1} = \mu V_t - \alpha \nabla L(W_t) W_{t+1} \qquad (1)$$

$$W_{t+1} = W_t + V_{t+1} \qquad (2)$$

The driving context classification accuracy of the system was evaluated. The achieved accuracy was 0.95. The classification performance is summarized in the confusion matrix from the following table, where slight differences in the per-class performance are visible. The class inner city has a higher detection accuracy, since its respective occupancy grids have a more distinctive structure. On the opposite side, a lower accuracy has been obtained for the parking lot class, mainly due to a lower number of training samples.

|  |  | Actual Class | | |
|---|---|---|---|---|
|  |  | inner city | motorway | parking lot |
| Predicted Class | inner city | 0.97 | 0.01 | 0.02 |
|  | motorway | 0.02 | 0.95 | 0.03 |
|  | parking lot | 0.02 | 0.05 | 0.93 |

Apart from its high classification accuracy, one other advantage of the system is represented by the speed of the algorithm, making it suitable for real-time applications. The algorithm runs on a single occupancy grid sample, without the need to accumulate grid data over time. The architecture is simple, the number of layers being reduced to a necessary minimum while keeping an optimal accuracy. Performance tests have shown that the driving context could be classified in approximately 100 ms, on an NVIDIA Quadro K1100M GPU with 384 CUDA Cores (Compute Unified Device Architecture), which by current standards is considered to be a low-performance GPU (Graphics Processing Unit).

The obtained classification results can be further used not only to select different autonomous driving strategies, but also to generate testing scenarios for highly autonomous driving. By adding driving context-related information, specific test cases may be generated for testing autonomous driving functionalities.

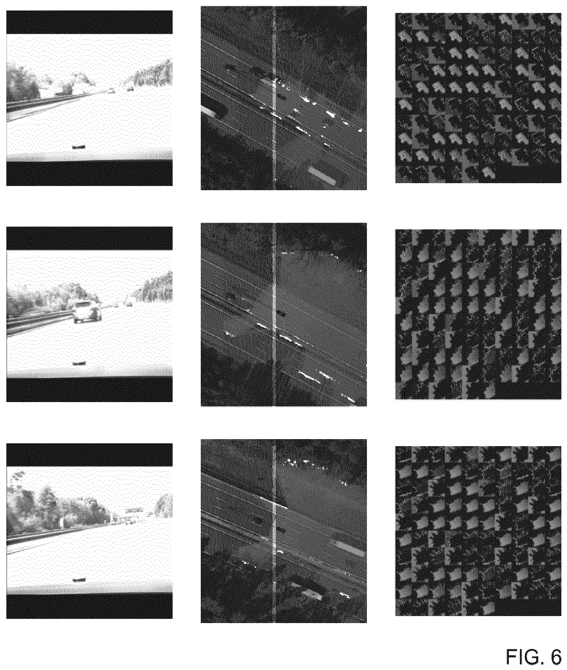

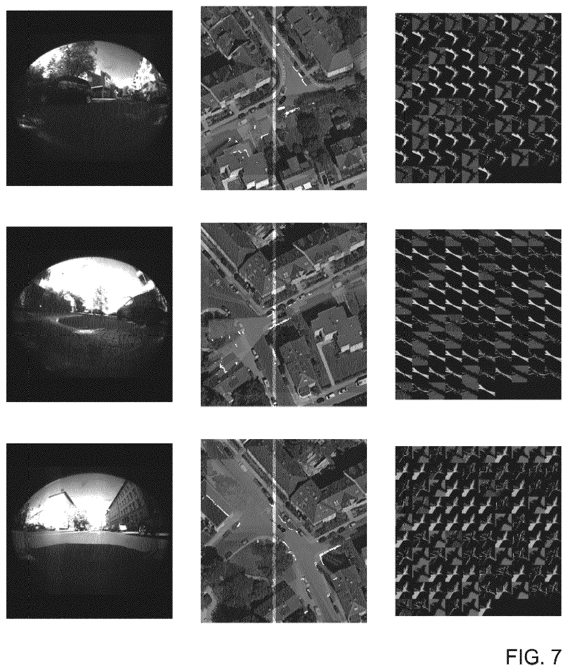

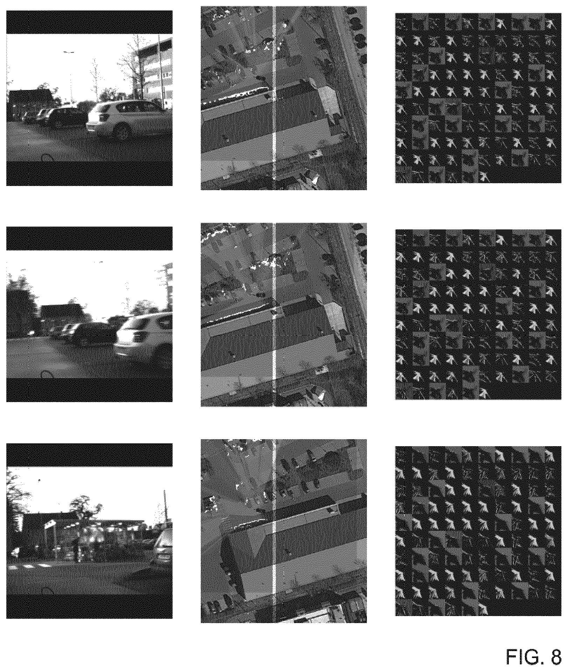

A couple of visual samples from the collected test drive data, accompanied by computed occupancy grids and activations of the first layer of the convolutional neural network are shown in Figs. 6 to 8, where the left column shows the recorded video stream, the middle column shows the computed occupancy grids, and the right column shows the activations. The video stream has been recorded using a video camera and is shown solely for visualization purposes. The white cells of the occupancy grids represent the occupied space, while the free space is marked with medium grey. Fig. 6 depicts test drive data for a motorway context, Fig. 7 depicts test drive data for an inner city context, and Fig. 8 depicts test drive data for a parking lot context.

References

## EP 3 921 777 B1

[1] R. Goeddel and E. Olson: "Learning semantic place labels from occupancy grids using CNNs", 2016 IEEE/RSJ International Conference on Intelligent Robots and Systems (IROS).

[2] P. Ondruska, J. Dequaire, D. Z. Wang, and I. Posner: "End-to-End Tracking and Semantic Segmentation Using Recurrent Neural Networks", Robotics: Science and Systems, Workshop on Limits and Potentials of Deep Learning in Robotics, 2016.

[3] S. Hoermann, M. Bach, and K. Dietmayer, "Dynamic Occupancy Grid Prediction for Urban Autonomous Driving: A Deep Learning Approach with Fully Automatic Labeling", arXiv:1705.08781, May 2017.

**Claims**

1. A method for a driver assistance system and for determining a driving context of a vehicle (40), wherein the driving context is one of various road traffic environments, the method comprising:

    - receiving (10) sensor data (SD) of one or more sensors (41) of the vehicle (40);
    - determining (11) an occupancy grid (OG) in real-time based on the sensor data (SD), wherein grid cells of the occupancy grid (OG) represent an occupancy probability;
    - parsing (12) the occupancy grid (OG) in real-time with a convolutional neural network (23) for determining the driving context; and
    - selecting, by an autonomous driving system, a driving strategy using the driving context.

2. The method according to claim 1, wherein the convolutional neural network (23) constructs a grid representation of the driving environment by converting the occupancy grid (OG) into an image representation, where the grid cells of the occupancy grid (OG) are coded as image pixels.

3. The method according to claim 1 or 2, wherein the occupancy grid (OG) is constructed using the Dempster-Shafer theory.

4. The method according to any of the preceding claims, wherein the occupancy information of the grid cells of the occupancy grid (OG) is gradually decreased over time.

5. The method according to any of the preceding claims, wherein the convolutional neural network (23) consists of a first convolutional layer with 48 kernels and a second convolutional layer with 96 kernels.

6. The method according to claim 5, wherein the size of the convolution kernel is $9 \times 9$ for the first convolutional layer and $5 \times 5$ for the second convolutional layer.

7. The method according to any of the preceding claims, wherein the convolutional neural network (23) comprises three fully connected layers linked to a final Softmax activation function for calculating driving context probabilities.

8. The method according to any of the preceding claims, wherein the sensor data (SD) are at least one of Sonar data, Lidar data, and Radar data.

9. The method according to any of the preceding claims, wherein the driving context is one of inner city and motorway.

10. A computer program code comprising instructions, which, when executed by at least one processor, cause the at least one processor to perform the method of any of claims 1 to 9.

11. An apparatus (20) for determining a driving context of a vehicle (40), wherein the driving context is one of various road traffic environments, the apparatus (20) comprising:

    - an input (21) configured for receiving (10) sensor data (SD) of one or more sensors (41) of the vehicle (40);
    - an occupancy grid fusion unit (22) configured for determining (11) an occupancy grid (OG) in real-time based on the sensor data (SD), wherein grid cells of the occupancy grid (OG) represent an occupancy probability; and
    - a convolutional neural network (23) configured for parsing (12) the occupancy grid (OG) in real-time to determine the driving context; and

- an autonomous driving system configured for selecting a driving strategy using the driving context.

12. A driver assistance system comprising an apparatus (20) according to claim 11 or being configured to perform a method according to any of claims 1 to 9 for selecting a driving strategy.

13. An autonomous or semi-autonomous vehicle (40) comprising a driver assistance system according to claim 12.

**Patentansprüche**

1. Verfahren für ein Fahrerassistenzsystem und zum Bestimmen eines Fahrkontexts eines Fahrzeugs (40), wobei der Fahrkontext einer von verschiedenen Straßenverkehrsumgebungen ist, wobei das Verfahren umfasst:

   - Empfangen (10) von Sensordaten (SD) eines oder mehrerer Sensoren (41) des Fahrzeugs (40);
   - Bestimmen (11) eines Belegungsgitters (OG) in Echtzeit basierend auf den Sensordaten (SD), wobei Gitterzellen des Belegungsgitters (OG) eine Belegungswahrscheinlichkeit repräsentieren;
   - Parsen (12) des Belegungsgitters (OG) in Echtzeit mit einem faltenden neuronalen Netzwerk (23) zum Bestimmen des Fahrkontexts; und
   - Auswählen, durch ein autonomes Fahrsystem, einer Fahrstrategie unter Verwendung des Fahrkontexts.

2. Verfahren nach Anspruch 1, wobei das faltende neuronale Netzwerk (23) eine Gitterdarstellung der Fahrumgebung konstruiert, indem es das Belegungsgitter (OG) in eine Bilddarstellung umwandelt, wobei die Gitterzellen des Belegungsgitters (OG) als Bildpixel kodiert werden.

3. Verfahren nach Anspruch 1 oder 2, wobei das Belegungsgitter (OG) unter Verwendung der Dempster-Shafer-Theorie konstruiert wird.

4. Verfahren nach einem der vorhergehenden Ansprüche, wobei die Belegungsinformationen der Gitterzellen des Belegungsgitters (OG) im Laufe der Zeit allmählich verringert werden.

5. Verfahren nach einem der vorhergehenden Ansprüche, wobei das faltende neuronale Netzwerk (23) aus einer ersten Faltungsschicht mit 48 Kernen und einer zweiten Faltungsschicht mit 96 Kernen besteht.

6. Verfahren nach Anspruch 5, wobei die Größe des Faltungskerns $9\times9$ für die erste Faltungsschicht und $5\times5$ für die zweite Faltungsschicht beträgt.

7. Verfahren nach einem der vorhergehenden Ansprüche, wobei das faltende neuronale Netzwerk (23) drei vollständig verbundene Schichten umfasst, die mit einer abschließenden Softmax-Aktivierungsfunktion zur Berechnung von Fahrkontextwahrscheinlichkeiten verknüpft sind.

8. Verfahren nach einem der vorhergehenden Ansprüche, wobei die Sensordaten (SD) wenigstens eines von Sonardaten, Lidardaten und Radardaten sind.

9. Verfahren nach einem der vorhergehenden Ansprüche, wobei der Fahrkontext einer von Innenstadt und Autobahn ist.

10. Computerprogrammcode, der Anweisungen umfasst, die bei Ausführung durch wenigstens einen Prozessor den wenigstens einen Prozessor veranlassen, das Verfahren nach einem der Ansprüche 1 bis 9 durchzuführen.

11. Vorrichtung (20) zum Bestimmen eines Fahrkontexts eines Fahrzeugs (40), wobei der Fahrkontext einer von verschiedenen Straßenverkehrsumgebungen ist, wobei die Vorrichtung (20) umfasst:

   - einen Eingang (21), der zum Empfangen (10) von Sensordaten (SD) eines oder mehrerer Sensoren (41) des Fahrzeugs (40) konfiguriert ist;
   - eine Belegungsgitter-Fusionseinheit (22), die zum Bestimmen (11) eines Belegungsgitters (OG) in Echtzeit basierend auf den Sensordaten (SD) konfiguriert ist, wobei Gitterzellen des Belegungsgitters (OG) eine Belegungswahrscheinlichkeit repräsentieren; und
   - ein faltendes neuronales Netzwerk (23), das zum Parsen (12) des Belegungsgitters (OG) in Echtzeit konfiguriert ist, um den Fahrkontext zu bestimmen; und

- ein autonomes Fahrsystem, das zum Auswählen einer Fahrstrategie unter Verwendung des Fahrkontexts konfiguriert ist.

12. Fahrerassistenzsystem, umfassend eine Vorrichtung (20) nach Anspruch 11 oder das konfiguriert ist, um ein Verfahren nach einem der Ansprüche 1 bis 9 zum Auswählen einer Fahrstrategie durchzuführen.

13. Autonomes oder teilautonomes Fahrzeug (40), umfassend ein Fahrerassistenzsystem nach Anspruch 12.

**Revendications**

1. Procédé pour un système d'assistance au conducteur et pour détermination d'un contexte de conduite d'un véhicule (40), dans lequel le contexte de conduite est l'un de divers environnements de circulation routière, le procédé comprenant :

   - recevoir (10) des données de capteur (SD) à partir d'un ou plusieurs capteurs (41) du véhicule (40) ;
   - déterminer (11) une grille d'occupation (OG) en temps réel sur la base des données de capteur (SD), des cellules de la grille d'occupation (OG) représentant une probabilité d'occupation ;
   - analyser (12) la grille d'occupation (OG) en temps réel à l'aide d'un réseau neuronal convolutif (23) pour déterminer le contexte de conduite ; et
   - sélectionner, par un système de conduite autonome, une stratégie de conduite utilisant le contexte de conduite.

2. Procédé selon la revendication 1, dans lequel le réseau neuronal convolutif (23) construit une représentation en grille de l'environnement de conduite en convertissant la grille d'occupation (OG) en représentation en image, les cellules de grille de la grille d'occupation (OG) étant encodées comme pixels d'image.

3. Procédé selon la revendication 1 ou 2, dans lequel la grille d'occupation (OG) est construite en utilisant la théorie Dempster-Shafer.

4. Procédé selon l'une quelconque des revendications précédentes, dans lequel l'information d'occupation des cellules de grille de la grille d'occupation (OG) diminue progressivement au fil du temps.

5. Procédé selon l'une quelconque des revendications précédentes, dans lequel le réseau neuronal convolutif (23) se compose d'une première couche convolutive à 48 noyaux et d'une seconde couche convolutive à 96 noyaux.

6. Procédé selon la revendication 5, dans lequel la taille du noyau de convolution est de $9{\times}9$ pour la première couche convolutive et de $5{\times}5$ pour la seconde couche convolutive.

7. Procédé selon l'une quelconque des revendications précédentes, dans lequel le réseau neuronal convolutif (23) comprend trois couches entièrement connectées liées à une fonction d'activation Softmax finale pour calculer des probabilités de contexte de conduite.

8. Procédé selon l'une quelconque des revendications précédentes, dans lequel les données de capteur (SD) sont au moins l'une parmi des données Sonar, des données Lidar et des données Radar.

9. Procédé selon l'une quelconque des revendications précédentes, dans lequel le contexte de conduite est l'un d'une ville interne et une autoroute.

10. Code de programme informatique comprenant des instructions qui, lorsqu'elles sont exécutées par au moins un processeur, amènent l'au moins un processeur à mettre en œuvre le procédé selon l'une quelconque des revendications 1 à 9.

11. Appareil (20) pour détermination d'un contexte de conduite d'un véhicule (40), dans lequel le contexte de conduite est l'un de divers environnements de circulation routière, l'appareil (20) comprenant :

   - une entrée (21) configurée pour recevoir (10) des données de capteur (SD) à partir d'un ou plusieurs capteurs (41) du véhicule (40) ;
   - une unité de fusion de grille d'occupation (22) configurée pour déterminer (11) une grille d'occupation (OG) en temps réel sur la base des données de capteur (SD), des cellules de la grille d'occupation (OG) représentant une probabilité d'occupation; et
- un réseau neuronal convolutif (23) configuré pour analyser (12) la grille d'occupation (OG) en temps réel pour déterminer le contexte de conduite ; et
- un système de conduite autonome configuré pour sélectionner une stratégie de conduite utilisant le contexte de conduite.

12. Système d'assistance au conducteur comprenant un appareil (20) selon la revendication 11 ou étant configuré pour mettre en œuvre le procédé selon l'une quelconque des revendications 1 à 9 pour sélectionner une stratégie de conduite.

13. Véhicule autonome ou semi-autonome (40) comprenant un système d'assistance au conducteur selon la revendication 12.

Receive
sensor data                                    10

Determine
occupancy grid                                 11

Parse occupancy grid with
convolutional neural network                   12

FIG. 1

FIG. 2

30    31    32

33

34

FIG. 3

40

22

23

41    SD    OG    CC

FIG. 4

a)

b)

c)

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. ONDRUSKA et al.** *End-to-End Tracking and Semantic Segmentation Using Recurrent Neural Networks*
- **S. HOERMANN et al.** *Dynamic Occupancy Grid Prediction for Urban Autonomous Driving: A Deep Learning Approach with Fully Automatic Labeling*
- **R. GOEDDEL** ; **E. OLSON**. Learning semantic place labels from occupancy grids using CNNs. *2016 IEEE/RSJ International Conference on Intelligent Robots and Systems (IROS)*

- **P. ONDRUSKA** ; **J. DEQUAIRE** ; **D. Z. WANG** ; **I. POSNER**. End-to-End Tracking and Semantic Segmentation Using Recurrent Neural Networks. *Robotics: Science and Systems, Workshop on Limits and Potentials of Deep Learning in Robotics*, 2016
- **S. HOERMANN** ; **M. BACH** ; **K. DIETMAYER**. Dynamic Occupancy Grid Prediction for Urban Autonomous Driving: A Deep Learning Approach with Fully Automatic Labeling. *arXiv:1705.08781*, May 2017